(19) **Europäisches Patentamt**
**European Patent Office**
**Office européen des brevets**

(11) **EP 2 691 277 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(51) Int Cl.:
***B60W 20/00*** (2016.01)

(21) Anmeldenummer: **12713038.3**

(22) Anmeldetag: **27.03.2012**

(86) Internationale Anmeldenummer:
**PCT/EP2012/055411**

(87) Internationale Veröffentlichungsnummer:
**WO 2012/130845 (04.10.2012 Gazette 2012/40)**

(54) **VERFAHREN ZUM BETREIBEN EINES HYBRID-ANTRIEBSSTRANGES**

METHOD FOR OPERATING A HYBRID DRIVE TRAIN

PROCÉDÉ POUR FAIRE FONCTIONNER UNE CHAÎNE CINÉMATIQUE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011016131**

(43) Veröffentlichungstag der Anmeldung:
**05.02.2014 Patentblatt 2014/06**

(73) Patentinhaber: **GETRAG B.V. & Co. KG**
**74199 Untergruppenbach (DE)**

(72) Erfinder: **BLESSING, Uli Christian**
**74078 Heilbronn (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 1 366 949    EP-A1- 1 714 817**
**EP-A1- 2 436 571    EP-A2- 1 452 375**
**EP-A2- 1 939 059    WO-A1-2010/137100**

**Beschreibung**

Die vorliegende Erfindung betrifft ein Verfahren zum Betreiben eines Hybrid-Antriebsstranges für ein Kraftfahrzeug, bei dem in einem ersten Betriebsmodus Leistung von einem Verbrennungsmotor bereitgestellt wird und bei dem in einem zweiten Betriebsmodus Leistung von einer elektrischen Maschine bereitgestellt wird, wobei ein Wechsel von einem in den anderen Betriebsmodus in Abhängigkeit vom Zustand des Antriebsstranges und/oder des Kraftfahrzeuges durchgeführt wird, wobei der Wechsel des Betriebsmodus in Abhängigkeit von wenigstens einer Schaltvariablen gesteuert wird, die eine Funktion eines angeforderten Leistungssollwertes ist.

Auf dem Gebiet der Antriebsstränge für Kraftfahrzeug sind seit Langem so genannte Hybrid-Antriebsstränge bekannt. Diese weisen eine erste Antriebseinheit zur Erzeugung von Antriebsleistung in Form eines Verbrennungsmotors sowie eine zweite Antriebseinheit auf, die eine elektrische Maschinenanordnung beinhaltet.

Neben so genannten Mild-Hybridkonzepten, bei denen eine elektrische Maschine nur zur Unterstützung des Verbrennungsmotors verwendet wird, sind auch Voll-Hybridkonzepte bekannt. Bei diesen kann das Fahrzeug entweder nur mittels des Verbrennungsmotors oder nur mittels der elektrischen Maschinenanordnung und ggf. im gemischten Betrieb angetrieben werden. Von dieser Art von Hybrid-Antriebsstrang wird vorliegend generell ausgegangen.

Der Betrieb eines Verbrennungsmotors in einem Kraftfahrzeug erfordert typischerweise eine Anfahrkupplung und ein Getriebe. Dabei ist es bekannt, das Getriebe stufenlos auszubilden. Es ist auch bekannt, den Verbrennungsmotor mit einem automatisierten Stufengetriebe zu kombinieren, bspw. einem automatisierten Handschaltgetriebe (ASG), einem Doppelkupplungsgetriebe (DKG) oder einem Wandler-Automatikgetriebe.

Bei Hybrid-Antriebssträngen ist es generell angestrebt, das Fahrzeug überwiegend in dem zweiten Betriebsmodus anzutreiben, bei dem Antriebsleistung von der elektrischen Maschine bereitgestellt wird. Der "flaschenhals" hierbei ist meistens die elektrische Energiequelle, die in der Regel als Batterie ausgebildet ist.

Ferner ist es generell möglich, in einem dritten Betriebsmodus den Verbrennungsmotor und die elektrische Maschine parallel zu betreiben. In einem so genannten Boost-Modus wird dabei Antriebsleistung sowohl von dem Verbrennungsmotor als auch der elektrischen Maschine bereitgestellt. Ferner besteht die Möglichkeit, in einem solchen dritten Betriebsmodus den Lastpunkt des Verbrennungsmotors zu verschieben, wobei überschüssige Leistung bereitgestellt wird, die bspw. zum Aufladen der Batterie verwendet werden kann.

Ferner wird bei derartigen Hybrid-Antriebssträngen generell angestrebt, während eines Bremsvorganges eine Rekuperation durchzuführen, so dass das Trägheitsmoment des fahrenden Fahrzeuges in generatorische Leistung umgesetzt wird, die wiederum zum Laden der Batterie verwendet werden kann.

Die Wechsel der Betriebsmode werden dabei in der Regel von verschiedenen Steuereinrichtungen durchgeführt.

Beispielsweise ist es aus dem Dokument DIE 100 35 027 A1 bekannt, die Wahl des Betriebsmodus anhand von Fahrdynamik, Fahrerverhalten und verfügbarer elektrischer Antriebsleistung durchzuführen und zusätzlich das vom Fahrzeug befahrene Streckenprofil als Kriterium für die Wahl des Betriebsmodus heranzuziehen. Ferner ist es aus diesem Dokument bekannt, den Übergang zum elektromotorischen Antrieb durch Abkoppeln des Verbrennungsmotors nach einer Verzögerungszeit vorzunehmen, die vom Streckenprofil abhängt. Auch ist es aus diesem Dokument bekannt, den Übergang zum verbrennungsmotarischen oder gemischten Betrieb nach einer Verzögerungszeit vorzunehmen, die von dem Streckenprofil abhängt.

Es ist ferner aus dem Dokument DE 101 53 509 A1 bekannt, für die Steuerung der Ladung der Batterie eine Mehrzahl von Schwellenwerten festzulegen und den Ladezustand mit diesen Schwellenwerten zu vergleichen, um den Betriebsmodus eines mit dem Motor verbundenen Anlassers/Generators zu bestimmen.

Das Dokument DE 601 29071 T2 offenbart ein Fahrzeugsteuerungssystem, um den Übergang zwischen Betriebsmodi in Abhängigkeit von erfassten Abnormalitäten im Antriebsstrang durchzuführen.

Das Dokument DE 10 2008 020842 A1 offenbart ferner, bei einem Mild-Hybrid-Antriebsstrang eine Steuereinrichtung zur Umschaltung zwischen zumindest zwei Betriebsmodi vorzusehen, die mit dem Bremspedal gekoppelt und derart ausgebildet ist, dass in einem ersten Betriebsmodus die Vorgabe für das Antriebsmoment in Abhängigkeit von der Position des Bremspedals variierbar ist.

Auch ist es bekannt (DE 10 2009 004671 A1), ein Antriebssystem eines Kraftfahrzeugs in einem Ladungsspeichermodus und einem Ladungsverbrauchermodus zu betreiben, wobei der Ladungsspeichermodus angefordert wird, wenn eine Information hinsichtlich einer zu erwartenden Umgebung ein bestimmtes Kriterium erfüllt.

Schließlich offenbart das Dokument DE 10 2006 034933 A1 ein Verfahren zur Steuerung eines Hybrid-Antriebsstranges, bei dem eine Mehrzahl von Steuerparametersätzen mit unterschiedlichen Soll-Ladezuständen für eine Hochleistungsbatterie bereitgestellt wird, wobei ein jeweiliger Betriebsmodus des Fahrzeugs der Mehrzahl von Steuerparametersätzen zugeordnet wird und ein aktueller Betriebsmodus festgelegt wird, wobei ein dem aktuellen Betriebsmodus entsprechender Steuerparametersatz zur Steuerung eines Ladebetriebs der hiochleistungsbatterie mit einem entsprechenden Soll-Ladezustand verwendet wird.

Die EP 1 939 059 A2 beschreibt eine Moduswechselsteuervorrichtung für ein Hybridfahrzeug umfassend einen Motor, einen Elektromotor und mindestens ein Antriebsrad. Es ist ferner eine Umschaltung zwischen einem elektrischen Antriebsmodus, in welchem nur der Elektromotor mit dem mindestens einen Antriebsrad angetrieben wird, und einem Hybridantriebsmodus, in welchem sowohl der Motor und der Elektromotor mit dem mindestens einen Antriebsrad beschrieben. Der Antriebsmodus wird aus dem Hybridantriebsmodus zum Elektroantriebsmodus geändert, wenn die Gaspedalöffnung geringer ist als ein erster Schwellenwert und der Antriebsmodus vom Elektroantriebsmodus zum Hybridantriebsmodus, wenn die geänderte Beschleunigungsvorrichtungsöffnung größer ist als ein zweiter Schwellenwert ist. Ein Hysterese-Wert wird zwischen dem ersten Schwellenwert und dem zweiten Schwellenwert definiert, und der Hysterese-Wert wird auf einem Fahrzeugbetriebszustand basierend geändert.

Aus der EP 1 366 949 A1 geht ein Hybridfahrzeug hervor, welches eine Brennkraftmaschine und einen Elektromotor als Antriebsquellen umfasst, wobei die Ausgangsleistung der Brennkraftmaschine und/oder des Elektromotors auf Antriebsräder zum Antrieb des Hybridfahrzeugs übertragen wird. Ein Antriebssteuerabschnitt ist dazu ausgelegt, die Brennkraftmaschine und den Elektromotor derart zu steuern/zu regeln, dass dann, wenn die Brennkraftmaschine gestoppt ist, der Elektromotor innerhalb einer normalen Motorantriebszone, die durch eine Obergrenze einer vorab in Abhängigkeit von der Fahrzeuggeschwindigkeit gesetzten Motorausgangsleistung definiert ist, allein zum Antrieb des Hybridfahrzeugs betrieben wird, und eine gewünschte Ausgangsleistung basierend auf der Bewegung eines Gaspedals vorhergesagt wird, worin, selbst wenn die vorhergesagte Ausgangsleistung in eine Antriebszone fällt, in der die Brennkraftmaschine eigentlich arbeiten sollte, und der Bewegungsbetrag des Gaspedals innerhalb einer vorbestimmten Dauer kleiner als ein vorbestimmter Betrag ist, der Elektromotor gesteuert/geregelt wird, um die die Obergrenze überschreitende vorhergesagte Ausgangsleistung bis zu einer maximalen Leistung des Elektromotor auszugeben, um den Antrieb des Fahrzeugs allein durch den Elektromotor fortzusetzen, und die Brennkraftmaschine gestoppt bleibt.

Ferner geht aus der EP 1 452 375 A2 ein Steuersystem und ein Steuerverfahren für ein Hybridelektrofahrzeug-Antriebsstrang hervor, welcher einen Motor, einen Elektromotor und einen elektrischen Generator mit Getriebe zum Bewirken geteilter Leistungsverteilung aus getrennten Stromquellen aufweist. Die Leistungsabgabe an Fahrzeugantriebsräder ist so koordiniert, dass so viel Leistung wie möglich auf Anforderung vom Fahrer zur Verfügung gestellt wird, ohne vordefinierte maximale und minimale Antriebsstrang-Grenzen zu verletzen.

Die WO 2010/137100 A1 beschreibt ein Hybridfahrzeug und ein Verfahren zu dessen Betrieb. In dem Fall, dass der Motor auf Reiseprioritätsmodus eingestellt ist, und der Beschränkungsmodus als Steuermodus eingestellt ist, wird ein Schwellenwert aus der Batterieleistung und der vorgegebenen Leistung berechnet und mit der Antriebsleistung verglichen. Das Hybridfahrzeug wird mit dem entsprechenden Antriebaggregat betrieben, je nachdem, ob die Antriebskraft größer oder kleiner als der Schwellenwert ist.

Die EP 1 714 817 A1 betrifft ein Getriebe mit einer Doppelkupplungsanordnung mit zwei Kupplungen und eine Eingangsseite für die Doppelkupplungsanordnung auf, die mit einem Motor verbunden ist. Eine Eingangswelle ist mit dem Motor über eine Kupplung verbindbar, und eine weitere Eingangswelle ist mit dem Motor über eine weitere Kupplung verbindbar. Eine Antriebseinheit ist mit der Eingangsseite der Doppelkupplungsanordnung verbunden, und eine andere Antriebseinheit ist mit einer der Eingangswellen oder mit einer Abtriebswelle verbunden.

Die EP 2 436 571 A1 offenbart ein Verfahren zum Betreiben eines Hybrid-Antriebsstranges gemäß dem Oberbegriff des Anspruchs 1.

Generell besteht bei Hybrid-Antriebssträngen ein Bedarf danach, ein möglichst umfassendes und leicht zu erweiterndes Konzept zur Steuerung und Auswahl der verschiedenen Betriebsmodi des Antriebsstranges bereitzustellen.

Diese Aufgabe wird gemäß einem ersten Aspekt der Erfindung bei dem eingangs genannten Verfahren dadurch gelöst, dass der Wechsel des Betriebsmodus in Abhängigkeit von wenigstens einer Schaltvariablen gesteuert wird, die eine Funktion eines angeforderten Leistungssollwertes ist. Durch die Bereitstellung einer Schaltvariablen kann ein vereinfachter Zustandsautomat für Betriebsmodi-Wechsel realisiert werden. Dabei ist die wichtigste physikalische Größe ein von einem Fahrerwunsch abgeleiteter Leistungssollwert. Eine Kennlinie der Schaltvariablen ist dabei gedächtnisbehaftet und wird daher rekursiv unter Berücksichtigung von vorherigen Werten der Schaltvariablen berechnet.

Mit anderen Worten können leistungsabhängige Schaltschwellen bereitgestellt werden, die auf einfache Weise variiert werden können. Jede weitere Einflussgröße kann entsprechend dem Einfluss auf die Leistung der elektrischen Maschine skaliert und bewertet werden und in die Schaltvariable einfließen.

Vorzugsweise wird bei dem erfindungsgemäßen Verfahren nicht nur ein Wechsel zwischen einem rein elektrischen Fahrmodus und einem rein verbrennungsmotorischen Fahrmodus möglich, sondern auch ein Wechsel in einen dritten Betriebsmodus, bei dem Antriebsleistung kombiniert bereitgestellt wird, und/oder in einen vierten Betriebsmodus, in dem gebremst wird.

Dabei ist es von besonderem Vorzug, wenn die verschiedenen Betriebsmodi in vier verschiedene Zustände einklassifiziert werden. Ein erster Zustand bezieht sich dabei auf den Betrieb bei stehendem Fahrzeug. Ein zweiter Zustand bezieht sich auf den Betrieb mit rein elektromotorischem Antrieb. Ein dritter Zustand bezieht sich generell auf einen Antriebsmodus mit Verbrennungsmotor, wobei Betriebsmodi zum Boosten und/oder zur Lastpunktverschiebung in diesen dritten Zustand einklassifiziert werden können. Ein vierter Zustand bezieht sich dabei rein auf das Bremsen, wobei dieser sowohl das rekuperierende Bremsen als auch das konventionelle Bremsen beinhalten kann.

Bei dem ersten Zustand, bei dem das Fahrzeug steht, kann ferner zwischen den Betriebsmodi "AUS", "STANDLA17EN" und "START/STOPP" unterschieden werden. Bei dem zweiten Zustand kann zwischen einem Betriebsmodus unterschieden werden, bei dem positive elektrische Antriebsleistung bereitgestellt wird ("ELEKTRISCHE FAHREN"), und einem solchen Betriebsmodus, bei dem ein Schubbetrieb mittels der elektrischen Maschine eingerichtet wird.

Ferner ist es bevorzugt, wenn ein derartiger "Zustandsautomat" generell von einem initialen Zustand "FAHRZEUG STEHT" in einen der anderen drei Zustände übergehen kann. Die Schaltvariable gibt dabei vorzugsweise an, ob der zugeordnete Betriebsmoduswechsel realisierbar ist oder nicht, auch, insbesondere, ob eine angeforderte elektrische Leistung realisierbar ist oder nicht.

Die Aufgabe wird somit vollkommen gelöst.

Von besonderem Vorzug ist es bei dem erfindungsgemäßen Verfahren, wenn die Schaltvariable eine binäre Variable ist.

Hierbei kann die Schaltvariable nur einen von zwei Werten annehmen, bspw. eine "1", wenn der Betriebsmoduswechsel möglich ist bzw. eine angeforderte (elektrische) Leistung realisierbar ist. Die Schaltvariable kann ferner den Wert "0" annehmen, wenn dieser Wechsel nicht möglich ist bzw. eine angeforderte (elektrische) Leistung nicht realisierbar ist.

Gemäß einer weiteren bevorzugten Ausführungsform ist die Schaltvariable ferner eine Funktion eines Grenzleistungswertes der elektrischen Maschine.

Zur leichteren Einordnung der Möglichkeit von Betriebsnroduswechseln wird ein so genannter Grenzleistungswert (bzw. Leistungsgrenzwert) eingeführt, der verschiedene Zustände des Antriebsstranges und/oder des Kraftfahrzeuges und/oder der Umgebungsbedingungen darstellen kann.

Gemäß einer bevorzugten Ausführungsform ist der Grenzleistungswert eine Funktion eines Maximalleistungswertes der elektrischen Maschine.

Folglich geht in den Grenzleistungswert die maximal von der elektrischen Maschine zur Verfügung stellbare Leistung ein, sei es eine motorische Antriebsleistung oder eine generatorische Leistung.

Ferner ist es bevorzugt, wenn der Grenzleistungswert eine Funktion von wenigstens einem Begrenzungsfaktor ist.

Der Begrenzungsfaktor ist vorzugsweise ein Begrenzungsfaktor der Leistung und kennzeichnet insbesondere zeitabhängige Einflussgrößen des Hybrid-Antriebes. Der Begrenzungsfaktor kann dabei bspw. durch Datenblätter und/oder durch Auswertung von Messungen festgelegt werden.

Von besonderem Vorzug ist es, wenn der Begrenzungsfaktor ein Wert zwischen Null und Eins ist.

Hierdurch erfolgt eine Art Normierung, durch die sämtliche Einflussgrößen, die bei einem Betriebsmoduswechsel eine Rolle spielen, auf den Wertebereich zwischen Null und Eins beschränkt werden können. Hierdurch ergibt sich eine einfacherer Zuordnung, insbesondere, wenn der Grenzleistungswert eine Funktion von mehreren Begrenzungsfaktoren ist. In diesem Fall haben die Begrenzungsfaktoren vorzugsweise sämtlich einen Wertebereich zwischen Null und Eins, so dass auf einfachere Weise ein Zusammenhang zwischen den Begrenzungsfaktoren herstellbar ist.

So ist es insbesondere bevorzugt, wenn der Grenzleistungswert eine Funktion eines Minimalwertes einer Mehrzahl von Begrenzungsfaktoren ist.

Auf diese Weise kann der Grenzleistungswert immer auf das "schwächste Glied" einer Kette von Einflussfaktoren abgestellt werden, so dass ein Betriebsmoduswechsel immer sicher in Abhängigkeit von dem Grenzleistungswert und einer darauf resultierenden Schaltvariablen durchgeführt werden kann.

Beispielsweise können die Begrenzungsfaktoren, die jeweils einen Wertebereich [0, 1] haben, einen Betriebsmoduswechsel dann ausschließen, wenn der Minimalwert der Mehrzahl von Begrenzungsfaktoren die "0" ist. Hingegen kann bei einer Feststellung des Wertes "1" eine uneingeschränkte Nutzung bzw. hinsichtlich der sich hinter den Begrenzungsfaktoren verbergenden Einflussgröße ein uneingeschränkter Betriebsmoduswechsel erfolgen.

Von besonderem Vorzug ist es, wenn der Grenzleistungswert eine Funktion von einem oder mehreren Begrenzungsfaktoren einer Gruppe von Begrenzungsfaktoren ist, die aufweist einen ersten Begrenzungsfaktor, der eine Funktion der Temperatur der elektrischen Maschine ist, einen zweiten Begrenzungsfaktor, der eine Funktion der Temperatur einer Leistungselektronik der elektrischen Maschine ist, einen dritten Begrenzungsfaktor, der eine Funktion der Temperatur einer Batterie ist, einen vierten Begrenzungsfaktor, der im Motorbetrieb der elektrischen Maschine eine Funktion eines Ladezustandes der Batterie ist, einen fünften Begrenzungsfaktor, der im Generatorbetrieb der elektrischen Maschine eine Funktion des Ladezustandes der Batterie ist, einen sechsten Begrenzungsfaktor, der eine Funktion einer Wiederstartzeit des Verbrennungsmotors ist, und einen siebten Begrenzungsparameter, der eine Funktion einer Momentenreserve ist.

Je nach Wechsel des Betriebsmodus ist es möglich, einen oder mehrere dieser Begrenzungsfaktoren bei der Bestimmung des Grenzleistungswertes und der sich daraus ergebenden Schaltvariablen heranzuziehen. Ferner ist es möglich, dieser Gruppe von Begrenzungsfaktoren auf vergleichsweise einfache Weise weitere Einflussgrößen hinzuzufügen, wie bspw. Umgebungsbedingungen (Außentemperatur des Fahrzeugs, Streckenprofil des Fahrzeugs, Fahrstil des Fahrers etc.).

Insgesamt ist es ferner bevorzugt, wenn ein Umschalten der Schaltvariablen von einem Binärwert auf den anderen in wenigstens einer Richtung einer Hysteresefunktion unterliegt.

Durch diese Maßnahme ist es möglich, häufige Änderungen der Schaltvariable zu vermeiden. Die Hysteresefunktion kann dabei mit einer zeitabhängigen Schwelle festgelegt werden, wobei die zeitabhängige Schwelle vorzugsweise in der Applikationsphase festgelegt wird und vorzugsweise je nach Fahrprogramm bzw. Fahrkomfort unterschiedlich sein kann.

Besonders bevorzugt ist es, wenn die Schaltvariable rekursiv wie folgt berechnet wird:

$$s_{Lj}(k) = \theta_1(k) \cdot s_{Lj}(K-1) + \theta_2(k),$$

wobei

$$\theta_1(k) = \begin{matrix} 1 & \text{für} & \left|P_{Lj}(k)\right| - \varepsilon_{Lj}(k) \le \left|P_{EM}(k)\right| \le \left|P_{Lj}(k)\right| \\ 0 & \text{sonst} \end{matrix}$$

wobei

$$\theta_2(k) = \begin{matrix} 1 & \text{für} & \left|P_{EM}(k)\right| < \left|P_{Lj}(k)\right| - \varepsilon_{Lj}(k) \\ 0 & \text{sonst} \end{matrix},$$

wobei

$P_{Lj}$ = Grenzleistungswert

$\varepsilon_{Lj}$ = zeitabhängige Schwelle der Hysteresefunktion

$P_{EM}$ = angeforderte elektrische Leistung der elektrischen Maschine.

Durch die rekursive Berechnung kann ein sich ändernder Fahrstil des Fahrers in eine entsprechende Änderung der Schaltvariablen allmählich einfließen. Durch die Formvariablen $\theta_1$ und $\theta_2$ wird hierbei die Hysterese mit einbezogen, um häufige Änderungen der Schaltvariablen zu vermeiden.

Insgesamt ist es ferner bevorzugt, wenn für eine Mehrzahl unterschiedlicher Wechsel von einem in einen anderen Betriebsmodus jeweils eine Schaltvariable vorgesehen ist, in deren Abhängigkeit der jeweilige Wechsel gesteuert wird. Durch die Bereitstellung von mehreren Schaltvariablen, die jeweils von einem Grenzleistungswert abhängen, der wiederum jeweils eine Funktion von einem oder mehreren (jeweils relevanten) Begrenzungsfaktoren ist, kann der Betriebsmoduswechsel auf letztlich einfache Weise durch binäre Schaltvariablen realisiert werden.

Ferner ist es bevorzugt, wenn der Wechsel des Betriebsmodus in Abhängigkeit von einer Wiederstartzeit und/oder einer Differenzdrehzahl zwischen einer Drehzahl des Verbrennungsmotors und einer Anschleppausgangsdrehzahl durchgeführt wird.

Diese Ausführungsform stellt unabhängig von der Steuerung eines Betriebsmoduswechsels in Abhängigkeit von wenigstens einer Schaltvariablen eine eigene Erfindung gemäß einem zweiten Aspekt dar.

Bei dem zweiten Aspekt der vorliegenden Erfindung wird in die Frage, ob ein Betriebsmoduswechsel durchgeführt werden kann oder nicht, auch die Frage einbezogen, wie schnell sich ein Verbrennungsmotor wieder starten lässt.

Da das Wiederstarten des Verbrennungsmotors in der Regel durch ein Anschleppen mittels der elektrischen Maschine erfolgt, hängt die Zeit, innerhalb der sich der Verbrennungsmotor erneut starten lässt, maßgeblich von der Differenz zwischen einer Drehzahl des Verbrennungsmotors und einer Drehzahl eines Gliedes des Antriebsstranges ab, das zum Starten des Verbrennungsmotors verwendet wird.

Bevorzugt ist daher die Anschleppausgangsdrehzahl die Drehzahl dieses Gliedes des Antriebsstranges. Insbesondere kann die Differenzdrehzahl eine Differenz zwischen einer Primärseite und einer Sekundärseite einer Reibkupplung sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1      eine schematische Darstellung eines Hybrid-Antriebsstranges für ein Kraftfahrzeug;

Fig. 2      eine schematische Darstellung verschiedener Betriebsmodi eines solchen Hybrid-Antriebsstranges;

Fig. 3      ein Blockdiagramm eines vereinfachten Zustandsautomaten zum Steuern von Betriebsmoduswechseln gemäß der vorliegenden Erfindung;

Fig. 4      einen ersten Begrenzungsfaktor, der eine Funktion der Temperatur der elektrischen Maschine ist;

Fig. 5      einen zweiten Begrenzungsfaktor, der eine Funktion der Temperatur einer Leistungselektronik der elektrischen Maschine ist;

Fig. 6      einen dritten Begrenzungsfaktor, der eine Funktion der Temperatur einer Batterie ist;

Fig. 7      einen vierten Begrenzungsfaktor, der im Motorbetrieb der elektrischen Maschine eine Funktion eines Ladezustandes der Batterie ist;

Fig. 8      einen fünften Begrenzungsfaktor, der im Generatorbetrieb der elektrischen Maschine eine Funktion des Ladezustandes der Batterie ist;

Fig. 9      einen sechsten Begrenzungsfaktor, der eine Funktion einer Differenzdrehzahl zwischen einer Drehzahl des Verbrennungsmotors und einer Anschleppausgangsdrehzahl ist;

Fig. 10     einen siebten Begrenzungsparameter, der eine Funktion einer Momentenreserve ist; und

Fig. 11     eine Funktionsdarstellung einer Schaltvariablen in Abhängigkeit von der angeforderten elektrischen Leistung.

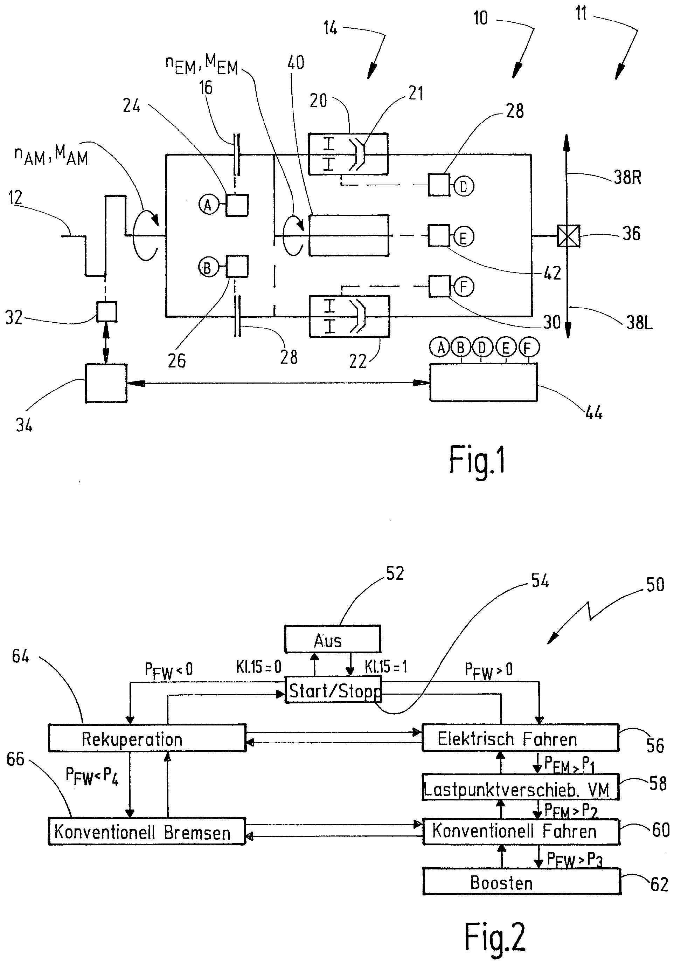

In Fig. 1 ist ein Fahrzeug, wie ein Personenkraftwagen, in schematischer Form dargestellt und mit 11 bezeichnet. Das Kraftfahrzeug weist einen Antriebsstrang 10 auf. Der Antriebsstrang weist einen Antriebsmotor 12 in Form eines Verbrennungsmotors sowie ein Doppelkupplungsgetriebe 14 auf.

Das Doppelkupplungsgetriebe 14 beinhaltet eine Doppelkupplungsanordnung mit einer ersten Reibkupplung 16 und einer zweiten Reibkupplung 18.

Ferner weist das Doppelkupplungsgetriebe 14 ein erstes Teilgetriebe 20 und ein zweites Teilgetriebe 22 auf. Die erste Reibkupplung 16 und das erste Teilgetriebe 20 bilden einen ersten Zweig, die zweite Reibkupplung 18 und das zweite Teilgetriebe 22 einen zweiten Zweig des Doppelkupplungsgetriebes 14.

Ferner beinhaltet das Doppelkupplungsgetriebe 14 eine Mehrzahl von Gangstufen, wobei die ungeraden Gangstufen dem ersten Teilgetriebe 20 und die geraden Gangstufen dem zweiten Teilgetriebe 22 zugeordnet sind (oder umgekehrt). Das Doppelkupplungsgetriebe 14 kann fünf, sechs, sieben oder mehr Gangstufen besitzen. Die Gangstufen des ersten Teilgetriebes 20 werden mittels jeweiliger Schaltkupplungen, insbesondere Synchron-Schaltkupplungen ein- und ausgelegt, wie in Fig. 1 schematisch bei 21 dargestellt ist. In entsprechender Weise werden die Gangstufen des zweiten Teilgetriebes 22 mittels jeweiliger Schaltkupplungen ein- und ausgelegt.

Die Schaltkupplungen sind vorzugsweise als Synchron-Schaltkupplungen ausgebildet. Alternativ ist es auch denkbar, die Schaltkupplungen als einfache Klauenkupplungen auszubilden. In diesem Fall können zusätzliche Mittel zur Synchronisierung vorgesehen sein.

Zur Betätigung der ersten Reibkupplung 16 ist ein erster Kupplungsaktuator 24 vorgesehen. In entsprechender Weise dient ein zweiter Kupplungsaktuator 26 zur Betätigung der zweiten Reibkupplung 18. Die Kupplungsaktuatoren 24, 26 können hydraulisch oder elektromechanisch ausgebildet sein.

Zur Betätigung der Schaltkupplungen 21 des ersten Teilgetriebes 20 ist ein erster Getriebeaktuator 28 vorgesehen. Zur Betätigung der Schaltkupplungen des zweiten Teilgetriebes 22 ist ein zweiter Getriebeaktuator 30 vorgesehen. Anstelle von zwei getrennten Getriebeaktuatoren kann auch eine kombinierte Aktuatorik zur Betätigung der Gangstufen beider Teilgetriebe 20, 22 vorgesehen sein. Die Getriebeaktuatoren können dabei hydraulisch oder elektromechanisch ausgebildet sein.

Ferner ist zur Betätigung des Antriebsmotors 12 ein Motoraktuator 32 vorgesehen, bspw. in Form eines elektronischen Gaspedals. Der Motoraktuator 32 ist mit einem Motorsteuergerät 34 verbunden.

Der Antriebsstrang 10 weist ferner ein Differenzial 36 auf, das mit dem Ausgang des Doppelkupplungsgetriebes 14 verbunden ist und die Antriebsleistung auf eine rechte und eine linke Antriebswelle 38L, 38R verteilt.

Der Antriebsmotor 12 liefert ein Antriebsmoment $M_{AM}$ und dreht mit einer Drehzahl $n_{AM}$.

Das dargestellte Layout des Doppelkupplungsgetriebes 14 sowie die dargestellte Sensorik und Aktorik sind lediglich beispielhaft als Grundlage für die Beschreibung der Erfindung zu verstehen. Die nachfolgende Beschreibung lässt sich dabei sowohl auf Antriebsstränge für den Längs- oder Quereinbau anwenden, sowie auch auf andere Arten von Getrieben, die eingangsseitig eine Reibkupplung aufweisen, die als Anfahr- und/oder Trennkupplung dient, sowie ein einer Schaltkupplung vergleichbares Element.

Die von dem Antriebsmotor 12 erzeugte Antriebsleistung wird alternativ entweder über die erste Reibkupplung 16 und das erste Teilgetriebe 20 auf die Getriebeausgangswelle oder über die zweite Reibkupplung 18 und das zweite Teilgetriebe 22 auf die Getriebeausgangswelle übertragen. Bei Übertragung von Antriebsleistung über eines der Teilgetriebe (bspw. über die Gangstufe drei im Teilgetriebe 20) ist die Reibkupplung 18 des anderen Zweigs geöffnet, so dass eine benachbarte Gangstufe in dem parallelen (freien) Teilgetriebe 22 bereits eingelegt werden kann. Im Zugbetrieb wird bspw. die nächsthöhere Gangstufe eingelegt, im Schubbetrieb bspw. die nächstniedrigere Gangstufe. Ein Gangwechsel erfolgt dann, indem die zwei Reibkupplungen 16, 18 derart überschneidend betätigt werden, so dass der Gangwechsel unter Last erfolgen kann. Der Antriebsstrang 10 ist als Hybrid-Antriebsstrang ausgebildet. Hierbei ist dem ersten Teilgetriebe 20 eine elektrische Maschine 40 zugeordnet. Genauer gesagt ist die elektrische Maschine 40 fest mit einer Eingangswelle des ersten Teilgetriebes 20 verbunden, bspw. über einen Stirnradsatz. Mit anderen Worten weist eine nicht näher bezeichnete Rotorwelle der elektrischen Maschine 40 eine Drehzahl auf, die proportional ist zu der Drehzahl der Getriebeeingangswelle des ersten Teilgetriebes 20.

Die elektrische Maschine 40 wird aus einem nicht näher dargestellten Energiespeicher (bspw. einer Batterie) gespeist und von einem Maschinenaktuator 42 angesteuert. Zu diesem Zweck kann eine entsprechende Leistungselektronik entweder in dem Maschinenaktuator 42 oder zugeordnet zu der elektrischen Maschine 40 vorgesehen sein.

Die elektrische Maschine 40 ist in dem dargestellten Ausführungsbeispiel dem Teilgetriebe 20 mit den ungeraden Gangstufen zugeordnet. Demzufolge lässt sich bspw. ein Anfahren des Kraftfahrzeuges rein elektrisch über die Gangstufe eins durchführen. Ferner kann bspw. bei einem Fahrbetrieb über das zweite Teilgetriebe 22 eine Rekuperation erfolgen, indem eine der Schaltkupplungen des ersten Teilgetriebes 20 geschlossen und die erste Reibkupplung 16 geöffnet bleibt.

Das Doppelkupplungsgetriebe kann mit nur einer derartigen elektrischen Maschine 40 in einem der Teilgetriebe 20, 22 ausgestattet sein. Alternativ ist es möglich, beiden Teilgetrieben 20, 22 jeweils eine elektrische Maschine zuzuordnen. Gemäß einer weiteren alternativen Ausführungsform ist es möglich, eine einzelne elektrische Maschine 40 über eine geeignete Kupplungsanordnung alternativ mit der Eingangswelle des ersten Teilgetriebes 20 oder mit der Getriebeeingangswelle des zweiten Teilgetriebes 22 zu verbinden.

Bei 40 ist eine Steuereinrichtung gezeigt, die mit den Kupplungsaktuatoren 24, 26 sowie den Getriebeaktuatoren 28, 30 und mit dem Maschinenaktuator 42 verbunden ist. Ferner steht die Steuereinrichtung 44 mit dem Motorsteuergerät 34 in Kommunikationsverbindung.

Die elektrische Maschine 40 gibt ein Drehmoment $M_{EM}$ ab und dreht mit einer Drehzahl $n_{EM}$. Der Antriebsstrang 10 ist als Voll-Hybrid-Antriebsstrang ausgebildet, so dass ein rein elektrisches Fahren oder ein rein verbrennungsmotorisches Fahren möglich ist. Ferner kann der Antriebsstrang zum Boosten verwendet werden, zum Rekuperieren oder auch für eine Lastpunktverschiebung. Auch ein Start/Stopp-Betrieb ist realisierbar.

Fig. 2 zeigt in schematischer Form die verschiedenen Betriebsmodi in Form eines Blockdiagramms 50. Ausgehend von einem ersten Betriebsmodus "AUS" 52, bei dem der Antriebsstrang bspw. mittels eines Zündschlüssels außer Betrieb oder in Kraft gesetzt wird, erfolgt zunächst ein Übergang in den Betriebsmodus 54 ("START/STOPP").

Wenn ein von einem Fahrerwunsch abgeleiteter Leistungssollwert $P_{FW} > 0$ ist, erfolgt ein Wechsel in den Betriebsmodus "ELEKTRISCH FAHREN" 56. Wenn eine von der elektrischen Maschine abgebbare Leistung $P_{EM}$ größer ist als eine erste Leistungsschwelle $P_1$, erfolgt ein Übergang in den Betriebsmodus "LASTPUNKTVERSCHIEBUNG" 58. Wenn die von der Maschine bereitstellbare elektrische Leistung $P_{EM}$ größer ist als eine zweite Leistungsschwelle $P_2$, erfolgt ein Übergang in den Betriebsmodus "KONVENTIONELL FAHREN" 60, das heißt Fahren mittels Verbrennungsmotor.

Wenn die angeforderte Leistung $P_{FW}$ größer ist als eine dritte Leistungsschwelle $P_3$, erfolgt ein Übergang in den Betriebsmodus "BOOSTEN" 62.

Wenn die angeforderte Leistung $P_{FW}$ kleiner ist als Null, erfolgt ein Übergang in einen Betriebsmodus "REKUPERATION" 64. Wenn ausgehend hiervon die angeforderte Leistung $P_{FW}$ kleiner ist als eine vierte Leistungsschwelle $P_4$, erfolgt ein Übergang in den Betriebsmodus "KONVENTIONELL BREMSEN" 66.

Ferner kann zwischen den Betriebsmodi 56 und 64 gewechselt werden, sowie zwischen den Betriebsmodi 60, 66.

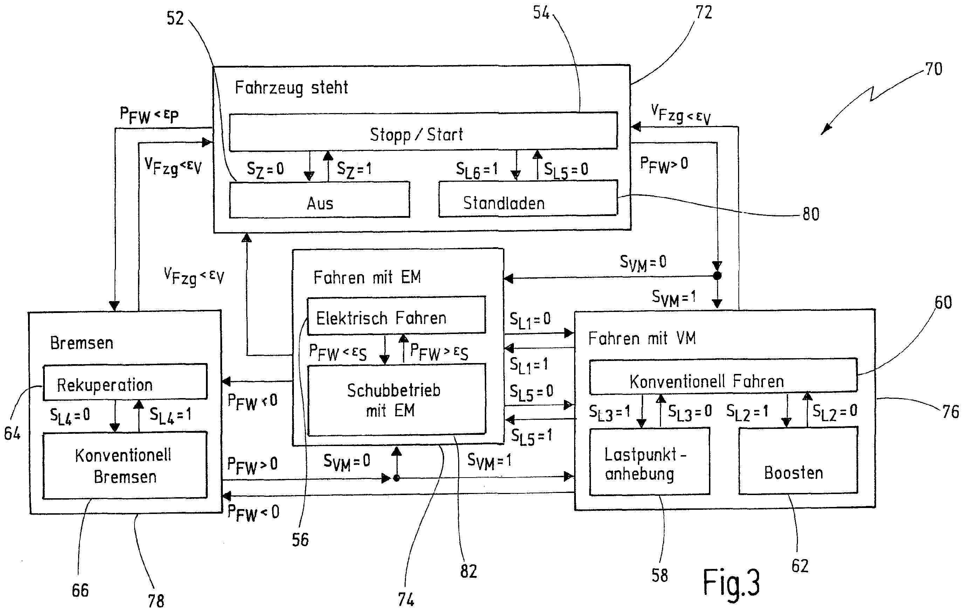

Fig. 3 zeigt ein Blockdiagramm 70 eines vereinfachten Zustandsautomaten in Form eines Hybridmanagers, mittels dessen Betriebsmodi-Wechsel für positive Fahrzeuggeschwindigkeiten $v_{Fzg}$ realisierbar sind. Die wichtigste physikalische Größe für Aktionen der Betriebsstrategie ist die aus dem Fahrerwunsch abgeleitete Anforderung für die Leistung (Leistungssollwert $P_{FW}$). Das Vorzeichen dieser Größe und ein erster Leistungsgrenzwert $\varepsilon_P$ entscheiden, ob vom Ausgangszustand "FAHRZEUG STEHT" 72 ein Übergang in einen Fahrzustand 74 oder 76 oder in einen Zustand "BREMSEN" 78 übergegangen wird. Wenn der Leistungssollwert $P_{FW}$ größer ist als Null, erfolgt abhängig von einem Statussignal $s_{VM}$ für den Verbrennungsmotor 12 ($s_{VM} = 1$, wenn Verbrennungsmotor läuft, $s_{VM} = 0$, wenn Verbrennungsmotor abgeschaltet) ein Übergang in den Zustand "FAHREN MIT VERBRENNUNGSMOTOR" 76 oder in den Zustand "FAHREN MIT ELEKTRISCHER MASCHINE" 74. Da vor Fahrtbeginn der Verbrennungsmotor 12 generell abgeschaltet ist, erfolgt bei ausreichend geladenem Energiespeicher zunächst der Übergang in den Zustand "FAHREN MIT EM" 74.

Alle Betriebsmodi 54-64, 80, 82 dieses Automaten, die einen Einsatz der elektrischen Maschine 40 mit der Leistung $P_{EM} \neq 0$ benötigen, werden bezüglich der aktuell angeforderten elektrischen Leistung relativ zur momentan realisierbaren Leistung mittels jeweiliger Schaltvariablen $s_{Lj}$ überwacht, wobei

$s_{Lj} = 1$, wenn angeforderte elektrische Leistung realisierbar, und
$s_{Lj} = 0$, wenn angeforderte elektrische Leistung nicht realisierbar, mit $j = 1, ...,6$.

Mittels einer ersten Schaltvariablen $s_{L1} = 0$ wird bei einer zu hohen Leistungsanforderung für den motorischen Betrieb der elektrischen Maschine 40 der Betriebsmodus "ELEKTRISCH FAHREN" 56 verlassen und es wird in den Betriebszustand "FAHREN MIT VM" 76 übergegangen. Von dort aus könnte der Antriebsstrang bei einer reduzierten Leistungsanforderung bzw. verbesserten Bedingungen für den Einsatz der elektrischen Maschine 40 mit der Schaltvariablen $s_{L1} = 1$ wieder in den Zustand "FAHREN MIT EM" zurückkehren.

In dem Zustand "FAHREN MIT EM" 74 wird unter Berücksichtigung eines weiteren Leistungsgrenzwertes Es die Entscheidung getroffen, ob aus dem Betriebsmodus "ELEKTRISCH FAHREN" 56 in den Betriebsmodus "SCHUBBETRIEB MIT EM" 82 gewechselt wird oder nicht. In dem Betriebsmodus "SCHUBBETRIEB MIT EM" 82 wird im Generatorbetrieb ein definiertes Schubmoment realisiert, das vorzugsweise zur gleichen Fahrzeugverzögerung wie beim Schubbetrieb des Verbrennungsmotors 12 führt. Unterschreitet dabei die Fahrzeuggeschwindigkeit $v_{Fzg}$ einen Grenzwert $\varepsilon_v$, so erfolgt ein Übergang in den Zustand "FAHRZEUG STEHT" 72. Bei einer negativen Leistungsanforderung ($P_{FW} < 0$) erfolgt hingegen ein Wechsel in den Zustand "BREMSEN" 78. Eine Umschaltung in den Zustand "FAHREN MIT VM" 76 erfolgt, falls mit $s_{L1} = 0$ die elektrische Maschine 40 eine Begrenzung im motorischen Betrieb erfährt oder mit einer fünften Schaltvariablen $s_{L5} = 0$ eine Limitierung im generatorischen Betrieb auftritt.

Innerhalb des Zustandes "FAHREN MIT VM" 76 werden in dem Betriebsmodus "KONVENTIONELL FAHREN" 60 bei mittleren Anforderungen des Leistungssollwertes $P_{FV}$ in jedem Betriebspunkt generatorische Leistungen berechnet, die das Potenzial zur Optimierung des Gesamtsystems besitzen. Liegen die ermittelten Leistungen unterhalb der aktuell zulässigen Grenzwerte für den Betrieb der elektrischen Maschine 40, so wird mittels der Schaltvariablen $s_{L3} = 1$ der Zustand "LASTPUNKTANHEBUNG" 58 angesteuert. Dieser Übergang kann sowohl im Zug- wie auch im Schubbetrieb des Verbrennungsmotors 12 erfolgen. Bei hohen Leistungssollwerten $P_{FV}$ wird zunächst das für eine gewählte Gangstellung erzielbare maximale motorische Drehmoment $M_{EM}$ der elektrischen Maschine 40 ermittelt. Anschließend wird darauf die zugehörige elektrische Leistung $P_{EM}$ berechnet. Wenn dieses Resultat innerhalb der aktuellen Leistungsgrenze der elektrischen Maschine 40 liegt, wird mit der Schaltvariablen $s_{L2} = 1$ der Betriebsmodus "BOOSTEN" 62 aktiviert. Überschreitet der Leistungssollwert $P_{vw}$ die aktuelle Leistungsgrenze, so wird die Anforderung an die elektrische Maschine 40 auf den Grenzwert reduziert. Der Übergang zum Betriebsmodus "BOOSTEN" 62 ist nur im Zugbetrieb des Verbrennungsmotors 12 sinnvoll. Eine Umschaltung in den Zustand "FAHRZEUG STEHT" 72 erfolgt, wenn die Fahrzeuggeschwindigkeit kleiner ist als eine vordefinierte Grenze ($v_{Fzg} < \varepsilon_v$).

Bei einem Leistungssollwert von $P_{FW} < 0$ wird der Zustand "BREMSEN" 64 angesteuert. Die Zuweisung des Leistungssollwertes an die konventionelle und die elektrische Bremsressource übernimmt ein Bremskoordinator, der vorliegend nicht näher betrachtet wird. Aus energetischen Gründen wird jedoch generell die Realisierung des Leistungssollwertes $P_{FV}$ durch die generatorisch betriebene elektrische Maschine 40 favorisiert. Bewegt sich die vom Bremsenkoordinator angeforderte generatorische Leistung $P_{EM}$ innerhalb des aktuell realisierbaren Bereiches der Leistung der elektrischen Maschine 40, so wird mittels der Schaltvariablen $s_{L4} = 1$ der Betriebsmodus "REKUPERATION" 64 aktiviert. Liegt der Leistungssollwert $P_{FW}$ außerhalb dieses zulässigen Bereiches, so erfolgt die Ansteuerung des Betriebsmodus "REKUPERATION" 64 mit dem zulässigen Grenzwert. Der Betriebsmodus wird verlassen, falls die Fahrzeuggeschwindigkeit unterhalb der Grenze $\varepsilon_v$ liegt oder wenn wieder ein positiver Leistungssollwert $P_{FW}$ vorliegt.

Der Wechsel des Betriebsmodus von "REKUPERATION" 64 in "KONVENTIONELL BREMSEN" 66 erfolgt in Abhängigkeit der Schaltvariablen $s_{L4}$.

In dem Zustand "FAHRZEUG STEHT" 72 wird beim Übergang des Fahrzeugs in den Stillstand der Betriebsmodus "STOPP/START" 54 aktiviert, wobei der Verbrennungsmotor 12 abgeschaltet wird. Bei einer zu geringen Ladung des elektrischen Energiespeichers wird dieser Zustand unmittelbar verlassen und mittels der Schaltvariablen $s_{L6}$ der Betriebsmodus "STANDLADEN" 80 angesteuert. Diese Schaltvariable $s_{L6}$ berücksichtigt die Leistungsgrenze der elektrischen Maschine 40 im generatorischen Betrieb bei nur geringfügig angehobener Leerlaufdrehzahl des Verbrennungsmotors 12. Eine Zündungsvariable $s_z$ ist logisch mit einem Zündschlüsselschalter des Fahrzeugbordnetzes verknüpft und ermöglicht Übergänge zwischen den Betriebsmodi "STOPP/START" 54 und "AUS" 52.

Es ist zu erkennen, dass die Übergänge zwischen den verschiedenen Betriebsmodi in den vier unterschiedlichen Zuständen im Wesentlichen mittels einfacher Schaltvariablen wechselbar sind, die jeweils als binäre Variablen ausgebildet sind und jeweils den Zustand "0" oder "1" annehmen können.

Die Schaltvariablen $s_{Lj}$ sind dabei generell eine Funktion eines Grenzleistungswertes $P_{Lj}$ der elektrischen Maschine 40. Der Grenzleistungswert $P_{Lj}$ ist dabei zum einen eine Funktion eines Maximalleistungswertes $P_{EM,max}$ der elektrischen Maschine 40 und zum anderen eine Funktion von wenigstens einem so genannten Begrenzungsfaktor $\beta_i$. Um eine Vielzahl von Umgebungsbedingungen in die Schaltvariable $s_{Lj}$ einfließen lassen zu können, wird vorliegend eine Mehrzahl von Begrenzungsfaktoren $\beta_i$ definiert, die jeweils auf bestimmte Umgebungszustände- oder Datensätze der verwendeten Komponenten des Antriebsstranges 10 abstellen.

So sind bspw. Einflussgrößen des Hybrid-Antriebs, wie z.B. die Temperaturen einzelnen Komponenten oder der Batterie-Ladezustand, wesentliche Parameter zur Entscheidung, ob ein Wechsel eines Betriebsmodus durchführbar ist. Zudem lassen sich aus diesen Einflussgrößen Restriktionen für einen solchen potenziellen Betriebsmodus ableiten und in einen Grenzleistungswert $P_{Lj}$ formulieren.

Wenn man die zeitabhängigen Einflussgrößen des Antriebsstranges 10 mit $\alpha_i$ bezeichnet, so lassen sich für den Betrieb der elektrischen Maschine 40 durch Auswertung von Messungen und Datenblättern Begrenzungsfaktoren $\beta_i$ der Leistung ermitteln und durch folgende Funktionen beschreiben:

$$\beta_i = f\{\alpha_i\}$$

$$i = 1, ..., m_a$$

wobei $m_a$ die Anzahl der Einflussgrößen kennzeichnet, die für die jeweiligen Betriebsmodi mit Verwendung der elektrischen Maschine 40 von Bedeutung sind.

Durch eine Normierung sämtlicher Begrenzungsfaktoren $\beta_i$ auf den Wertebereich [0,1] kann durch eine Bewertung mit "0" der geforderte Betrieb der elektrischen Maschine 40 ausgeschlossen werden. Bei der Bewertung mit "1" wird bezüglich der betrachteten Einflussgröße eine uneingeschränkte Nutzung ermöglicht. In dem Zustandsautomat 70 der Fig. 3 werden Übergänge zu Betriebsmodi mit Einsatz der elektrischen Maschine 40 durch die Schaltvariablen $s_{Lj}$ an realisierbare Leistungen geknüpft, wie oben beschreiben. Per Schaltvariablen $s_{Lj}$ wird nun mit den normierten Begrenzungsfaktoren $\beta_i$ eine Limitierung für die aktuell realisierbare Leistung der elektrischen Maschine 40 in Form des Grenzleistungswertes $P_{Lj}$ in folgender Weise zugeordnet:

$$P_{Lj} = \min\{\beta_{j1}, ..., \beta_{jk}\} \cdot P_{EM,max}$$

$$j = 1, ..., 6.$$

In dieser Funktion wird zunächst durch Auswahl der Begrenzungsfaktoren festgelegt, welche dieser Begrenzungsfaktoren für die Ermittlung des Grenzleistungswertes $P_{Lj}$ relevant sind. Die Variable $P_{EM,max}$ charakterisiert die drehzahlabhängige maximale Leistung der elektrischen Maschine 40. Für diese Größe ist, abhängig von der im betrachteten Betriebsmodus geforderten Nutzung der elektrischen Maschine 40 entweder die motorische Maximalleistung $P_{EM,M,max}$ oder die generatorische Maximalleistung $P_{EM,G,max}$ bei der momentanen Drehzahl zu verwenden.

In der durch den Zustandsautomaten 70 der Fig. 3 realisierten Betriebsstrategie wird fortlaufend überprüft, ob die in einem Betriebsmodus angeforderte Leistung (Leistungssollwert $P_{FW}$) der elektrischen Maschine innerhalb des Grenzleistungswertes $P_{Lj}$ liegt, der für den jeweiligen Betriebsmoduswechsel relevant ist. Folglich kann über die Begrenzungsfaktor $\beta_i$ ein Wechsel von einem Betriebsmodus in einen Betriebsmodus mit Betrieb der elektrischen Maschine 40 verhindert, bzw. ein solcher Betriebsmodus beendet werden.

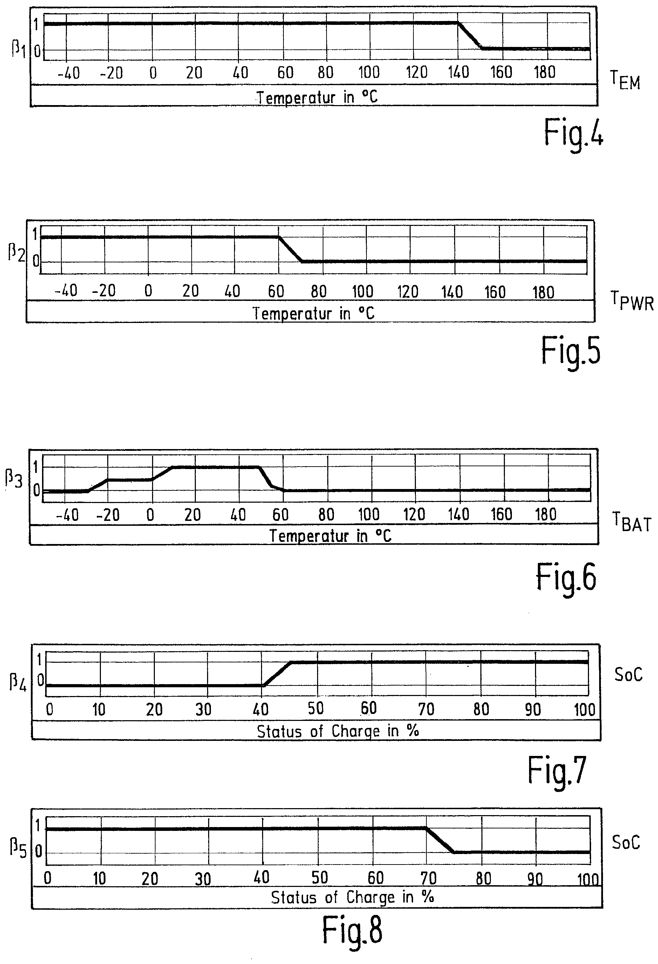

Im Folgenden werden mehrere systembedingte Einflussgrößen auf die Betriebsstrategie beschrieben. Die Kennlinien der daraus ermittelten Begrenzungsfaktoren $\beta_i$ sind in den Figuren 4 bis 10 gezeigt.

Wie es in Fig. 4 gezeigt ist, ist ein erster Begrenzungsfaktor $\beta_1$ eine Funktion der Temperatur $T_{EM}$ der elektrischen Maschine. Übersteigt diese Temperatur (üblicherweise die Temperatur im Bereich eines Wickelkopfes) einen bestimmten Grenzwert (hier bspw. 140°C), sinkt der Begrenzungsfaktor $\beta_1$ vorzugsweise linear bis auf einen Wert von 0 (bei einer Temperatur von etwa 150°C).

Zur Bestimmung des Begrenzungsfaktors $\beta_1$ kann ein Leistungskennfeld der elektrischen Maschine 40 verwendet werden.

Fig. 5 zeigt ein Diagramm eines zweiten Begrenzungsfaktors $\beta_2$, der von der Temperatur einer Leistungselektronik zum Ansteuern der elektrischen Maschine 40 abhängt. Diese Temperatur $T_{PWR}$ wirkt ab 60°C limitierend auf den zweiten Begrenzungsfaktor $\beta_2$, so dass dieser bei 70°C auf 0 absinkt.

Fig. 6 zeigt einen dritten Begrenzungsfaktor $\beta_3$, der eine Funktion der Temperatur $T_{BAT}$ einer Batterie ist. Der Begrenzungsfaktor ist Null unterhalb von Temperaturen von -30°C und oberhalb von Temperaturen von etwa 55°C. In einem Bereich von etwa -20°C bis 0° ist $\beta_3$ etwa 0,5. Nur im Bereich von etwa 10°C bis 50°C beträgt $\beta_3$ = 1. Die Temperatur $T_{BAT}$ der Batterie kann durch geeignete Kühl- oder Heizeinrichtungen beeinflusst werden, um die Temperatur $T_{BAT}$ möglichst immer im optimalen Bereich zu halten.

Zwei weitere wichtige Begrenzungsfaktoren $\beta_4$ und $\beta_5$ betreffen den Ladezustand (SoC) der Batterie. Für den motorischen Betrieb ist der Begrenzungsfaktor $\beta_4$ relevant (Fig. 7). Unterhalb eines Wertes von SoC von 40 % ist der Begrenzungsfaktor $\beta_4$ = 0, oberhalb von etwa 45°C gilt $\beta_4$ = 1.

Für den generatorischen Betrieb der elektrischen Maschine ist der Begrenzungsfaktor $\beta_5$ der Fig. 8 anwendbar. Hier gilt $\beta_5$ = 1 für Ladezustände SoC von unterhalb 70 %. Ferner ist $\beta_5$ = 0 für Ladezustände SoC oberhalb von 75 %.

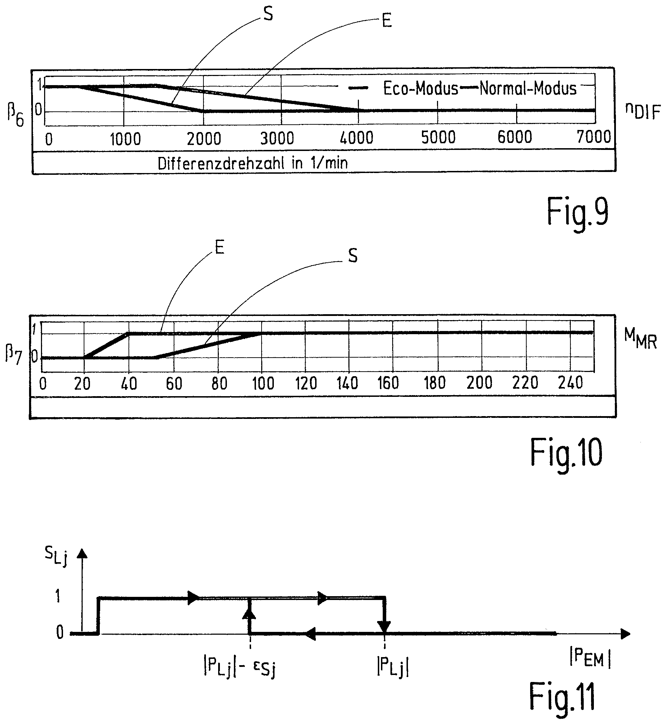

Fig. 9 zeigt einen Begrenzungsfaktor $\beta_6$, der eine Wiederstartzeit des ausgeschalteten Verbrennungsmotors 12 berücksichtigt. Die Wiederstartzeit ist die Zeit, die für das erneute Starten des Verbrennungsmotors 12 notwendig ist. Diese Zeit ist eine Funktion der Differenzdrehzahl zwischen einer Drehzahl des Verbrennungsmotors und einer Anschleppausgangsdrehzahl. Die Anschleppausgangsdrehzahl ist die Drehzahl eines Gliedes des Antriebsstranges, das zum Starten des Verbrennungsmotors 12 verwendet wird.

In der Regel ist dieses Glied die Drehzahl der Sekundärseite der Kupplung des aktiven Teilgetriebes. Bei längeren Phasen des elektrischen Fahrens 56 ist die Drehzahl $n_{AM}$ des Verbrennungsmotors gleich Null. In manchen Fällen, wenn der Betriebsmodus "ELEKTRISCHES FAHREN" 56 schnell wieder verlassen werden muss, kann die Drehzahl $n_{AM}$ des Verbrennungsmotors 12 auch größer als Null sein.

Der Begrenzungsfaktor $\beta_6$ ist in einem Normalmodus S für Drehzahlen unterhalb von etwa 700 U/min = 1 und für Differenzdrehzahlen oberhalb von 2000 U/min = 0. Dazwischen erfolgt ein linearer Übergang. In einem Eco-Modus ist der Begrenzungsfaktor $\beta_6$ bis zu einer Differenzdrehzahl von etwa 1500 U/min = 1, und oberhalb von 4000 U/min = 0.

In einem Sport-Modus wird der Verbrennungsmotor 12 niemals abgeschaltet, so dass dieser Begrenzungsfaktor dann nicht berücksichtigt wird.

Ein ähnlicher Begrenzungsfaktor $\beta_7$ ist in Fig. 10 gezeigt. Dieser betrifft eine so genannten Momentenreserve. Um ein von einem Fahrerwunsch abgeleitetes erhöhtes Moment mit geringen Reaktionszeiten realisieren zu können, wird mit der Momentenreserve ein spontan abrufbares Moment vorgehalten, um in den häufigsten Fahrsituationen noch eine vom Fahrer fühlbare additive positive Längsbeschleunigung zu erzielen. Die Momentenreserve $M_{MR}$ dient als Einflussgröße, um daraus eventuell eine Beschränkung der elektrischen Maschine 40 im Generatorbetrieb abzuleiten. Für Drehmomente oberhalb von 100 Nm ist in einem normalen Fahrmodus S der Begrenzungsfaktor $\beta_7$ = 1 und unterhalb von $M_{MR}$ = 20 Nm gilt $\beta_7$ = 0. In einem Eco-Modus E wird hingegen eine Momentenreserve von 40 Nm für hinreichend erachtet, so dass ab diesem Wert $\beta_7$ = 1 ist.

Mittels der oben beschriebenen Begrenzungsfaktoren $\beta_i$, i = 1,...,7 kann für jede Schaltvariable $s_{Lj}$ der zugehörige Grenzleistungswert $P_{Lj}$ für den Einsatz der elektrischen Maschine 40 ermittelt werden. Ferner versteht sich, dass auf einfache Weise weitere Begrenzungsfaktoren mit in die Ermittlung der Schaltvariablen einbezogen werden können, sollte dies gewünscht sein.

Ferner ist zu verstehen, dass die oben angegebenen speziellen Werte der einzelnen Einflussgrößen, bei denen sich die jeweiligen Begrenzungsfaktoren ändern, lediglich beispielhaft angegeben sind.

Für die Ermittlung der Schaltvariablen werden die Grenzleistungswerte $P_{Lj}$ wie folgt ermittelt:

$$P_{L1} = \min\{\beta_1,\beta_3,\beta_4,\beta_5,\beta_6\} \cdot P_{EM,M,max}$$
$$P_{L2} = \min\{\beta_1,\beta_3,\beta_4,\beta_5,\} \cdot P_{EM,M,max}$$
$$P_{L3} = \min\{\beta_2,\beta_3,\beta_4,\beta_5,\beta_7\} \cdot P_{EM,G,max}$$
$$P_{L4} = \min\{\beta_2,\beta_3,\beta_4,\beta_5\} \cdot P_{EM,G,max}$$
$$P_{L5} = \min\{\beta_2,\beta_3,\beta_4,\beta_5\} \cdot P_{EM,G,max}$$
$$P_{L6} = \min\{\beta_2,\beta_3,\beta_4,\beta_5,\beta_7\} \cdot P_{EM,G,max}$$

Mit anderen Worten ergeben sich die jeweiligen Grenzleistungsfaktoren $P_{Lj}$ jeweils als Funktion eines den Minimalwertes der zur Ermittlung des jeweiligen Grenzleistungswertes $P_j$ einbezogenen Begrenzungsfaktoren. Wenn bspw. für die Ermittlung des Grenzleistungsfaktors $P_{L1}$ die Begrenzungsfaktoren $\beta_1$, $\beta_3$ sowie $\beta_4$ sowie $\beta_5$ jeweils den Wert "1" haben oder einen Wert größer als "0", so ist der Minimalwert dennoch 0, wenn bspw. $\beta_6$ = 0 ist (wenn also bspw. im normalen Fahrmodus S die Differenzdrehzahl $n_{DIF}$ größer ist als 2000 U/min).

In der durch den Zustandsautomaten 70 der Fig. 3 realisierten Betriebsstrategie wird fortlaufend überprüft, ob die in einem Betriebsmodus angeforderte Leistung $P_{EM}$ der elektrischen Maschine 40 innerhalb der durch die Grenzleistungswerte $P_{Lj}$ definierten Grenzen liegt. Damit kann dann mittels der Schaltvariablen $s_{Lj}$ ggf. ein Wechsel in einen solchen angeforderten Betriebsmodus verhindert bzw. ein solcher Betriebsmodus beendet werden.

In dem obigen Beispiel von $P_{L1}$ wird im einfachsten Fall überprüft, ob ausgehend von dem Betriebszustand "KONVENTIONELL FAHREN" 60 ein Wechsel in den Betriebsmodus "ELEKTRISCH FAHREN" 56 möglich ist. Dies ist dann der Fall, wenn im einfachsten Fall der angeforderte Leistungssollwert $P_{EM}$ (= $P_{FW}$) kleiner ist als $P_{L1}$. In dem obigen Beispiel war $P_{L1} = 0$, da $\beta_6 = 0$, so dass die Schaltvariable $S_{L1}$ den Wert 0 erhält und folglich ein Wechsel in den Betriebsmodus "ELEKTRISCH FAHREN" 56 nicht möglich ist.

Die übrigen Betriebsmodi-Wechsel ergeben sich aus den obigen Gleichungen.

Für die Schaltvariable $s_{L2}$ ist als Sollwert $P_{EM}$ der elektrischen Maschine der Wert $P_{FW}$-$P_{VM}$ heranzuziehen, also die Differenz zwischen Leistungssollwert und der bereits durch den Verbrennungsmotor bereitgestellten Leistung. Für die Schaltvariable $s_{L3}$ ist als Sollwert $P_{EM}$ ein Leistungssollwert $P_{LP}$ heranzuziehen, der die Lastpunktanhebung definiert. Für die Schaltvariable $s_{L4}$ ist der Leistungssollwert $P_{EM} = P_{FW}$ heranzuziehen. Für die Schaltvariable $s_{L5}$ ist ein Sollwert $P_{EM} = P_{SB}$ heranzuziehen, der den Schubbetrieb mittels elektrischer Maschine 40 charakterisiert. Diese Sollwertvorgabe wird durch eine gangabhängige Schubleistung eines virtuell wirkenden Verbrennungsmotors festgelegt.

Die Schaltvariable $s_{L6}$ wird in Abhängigkeit von einem Sollwert $P_{EM} = P_{SL}$ der elektrischen Maschine ermittelt, der vom Ladezustand und der Leistungsaufnahme der im Leerlauf wirkenden Verbraucher abhängig ist.

Wie oben beschrieben, kann eine Ermittlung der Schaltvariablen durch eine einfache Ermittlung einer Differenz zwischen dem jeweiligen Sollwert $P_{EM}$ der elektrischen Maschine und dem jeweiligen Grenzleistungswert $P_{Lj}$ erfolgen.

Besonders bevorzugt ist es jedoch, wenn die jeweilige Schaltvariable $s_{Lj}$ eine Hysterese beinhaltet, um häufige Änderungen der Schaltvariablen bei Sollwerten in der Nähe des Grenzleistungswertes zu vermeiden. Hierzu wird eine zeitabhängige Schwelle $\varepsilon_{sj} > 0$ verwendet, die in der Applikationsphase festgelegt wird und je nach Fahrprogramm bzw. Fahrkomfort unterschiedlich ist.

Eine Kennlinie zur Ermittlung der jeweiligen Schaltvariablen $s_{Lj}$ ist in Fig. 11 gezeigt. Diese hängt von dem Betrag $|P_{EM}|$ des jeweils angeforderten Leistungssollwertes ab. Zur Einrichtung der Hysterese wird dieser Leistungssollwert $|P_{EM}|$ entweder mit dem Betrag des jeweiligen Grenzleistungswertes ($|P_{Lj}|$) oder mit einem hierzu versetzten Wert verglichen ($|PLj|$-$\varepsilon_{sj}$).

Ferner ist es bevorzugt, wenn die Kennlinie $s_{Lj} = f|P_{EM}|$ gedächtnisbehaftet ist. Hier wird $s_{Lj}$ mit einer Abtastzeit $T_A$ in einer zeitdiskreten Form mittels der zum jeweiligen Zeitpunkt $t_k = k \cdot T_A$ bestimmten Größen von $|P_{EM}(k)|$ und $|P_{Lj}(k)|$ berechnet. Eine rekursive Berechnung zur Ermittlung der Schaltvariablen $s_{Lj}$ ergibt sich dabei vorzugsweise wie folgt:

$$s_{Lj}(k) = \theta_1(k) \cdot s_{Lj}(k-1) + \theta_2(k).$$

Initialwerte dieser rekursiven Gleichung bei einer Leistungsanforderung von $|P_{EM}| > 0$ ist $s_{Lj}(0) = 1$. Die in der obigen rekursiven Gleichung enthaltenen Formvariablen $\theta_1(k)$ und $\theta_2(k)$ sind durch folgende Beziehungen definiert:

$$\theta_1(k) = \begin{matrix} 1 & \text{für} & \left|P_{Lj}(k)\right| - \varepsilon_{Lj}(k) \le \left|P_{EM}(k)\right| \le \left|P_{Lj}(k)\right| \\ 0 & \text{sonst} \end{matrix}$$

$$\theta_2(k) = \begin{matrix} 1 & \text{für} & \left|P_{EM}(k)\right| < \left|P_{Lj}(k)\right| - \varepsilon_{Lj}(k) \\ 0 & \text{sonst} \end{matrix}.$$

Hierbei ist $\varepsilon_{Lj} = \varepsilon_{sj}$.

Durch die obige rekursive Gleichung können folglich fortlaufend die Leistungssollwerte $P_{EM}$ sämtlicher Betriebsmodi mit Einsatz der elektrischen Maschine 40 hinsichtlich ihrer zugehörigen Grenzleistungswerte $P_{Lj}$ überwacht werden.

**Patentansprüche**

1. Verfahren zum Betreiben eines Hybrid-Antriebsstranges (10) für ein Kraftfahrzeug (11), bei dem in einem ersten Betriebsmodus (60; 76) Leistung von einem Verbrennungsmotor (12) bereitgestellt wird und bei dem in einem zweiten Betriebsmodus (56; 74) Leistung von einer elektrischen Maschine (40) bereitgestellt wird, wobei ein Wechsel von einem in den anderen Betriebsmodus in Abhängigkeit vom Zustand des Antriebsstranges (11) und/oder des Kraftfahrzeuges (10) durchgeführt wird, wobei der Wechsel des Betriebsmodus in Abhängigkeit von wenigstens einer Schaltvariablen ($s_{Lj}$) gesteuert wird, die eine Funktion eines angeforderten Leistungssollwertes ($P_{FW}$) ist, **dadurch gekennzeichnet, dass**
eine Kennlinie der wenigstens einen Schaltvariablen ($s_{Lj}$) gedächtnisbehaftet ist und rekursiv unter Berücksichtigung von vorherigen Werten der Schaltvariablen berechnet wird.

2. Verfahren nach Anspruch 1, **dadurch gekennzeichnet, dass** die Schaltvariable ($s_{Lj}$) eine binäre Variable ist.

3. Verfahren nach Anspruch 1 oder 2, **dadurch gekennzeichnet, dass** die Schaltvariable ($s_{Lj}$) ferner eine Funktion eines Grenzleistungswertes ($P_{Lj}$) der elektrischen Maschine (40) ist.

4. Verfahren nach Anspruch 3, **dadurch gekennzeichnet, dass** der Grenzleistungswert ($P_{Lj}$) eine Funktion eines Maximalleistungswertes ($P_{EMmax}$) der elektrischen Maschine (40) ist.

5. Verfahren nach Anspruch 3 oder 4, **dadurch gekennzeichnet, dass** Grenzleistungswert ($P_{Lj}$) eine Funktion wenigstens eines Begrenzungsfaktors ($\beta_i$) ist.

6. Verfahren nach Anspruch 5, **dadurch gekennzeichnet, dass** der Begrenzungsfaktor ($\beta_i$) ein Wert zwischen Null und Eins ist.

7. Verfahren nach Anspruch 5 oder 6, **dadurch gekennzeichnet, dass** der Grenzleistungswert ($P_{Lj}$) eine Funktion eines Minimalwertes einer Mehrzahl von Begrenzungsfaktoren ($\beta_i$) ist.

8. Verfahren nach einem der Ansprüche 5-7, **dadurch gekennzeichnet, dass** der Grenzleistungswert ($P_{Lj}$) eine Funktion von einem oder mehreren Begrenzungsfaktoren ($\beta_1$) einer Gruppe von Begrenzungsfaktoren ist, die aufweist einen ersten Begrenzungsfaktor ($\beta_1$), der eine Funktion der Temperatur ($T_{EM}$) der elektrischen Maschine (40) ist, einen zweiten Begrenzungsfaktor ($\beta_2$), der eine Funktion der Temperatur ($T_{PWR}$) einer Leistungselektronik der elektrischen Maschine (40) ist, einen dritten Begrenzungsfaktor ($\beta_3$), der eine Funktion der Temperatur ($T_{BAT}$) einer Batterie ist, einen vierten Begrenzungsfaktor ($\beta_4$), der im Motorbetrieb der elektrischen Maschine (40) eine Funktion eines Ladezustandes (SoC) der Batterie ist, einen fünften Begrenzungsfaktor ($\beta_5$), der im Generatorbetrieb der elektrischen Maschine (40) eine Funktion des Ladezustandes (SoC) der Batterie ist, einen sechsten Begrenzungsfaktor ($\beta_6$), der eine Funktion einer Wiederstartzeit des Verbrennungsmotors (12) ist, und einen siebten Begrenzungsparameter ($\beta_7$), der eine Funktion einer Momentenreserve ($M_{MR}$) ist.

9. Verfahren nach einem der Ansprüche 2 - 8, **dadurch gekennzeichnet, dass** ein Umschalten der Schaltvariablen ($s_{Lj}$) von einem Binärwert auf den anderen Binärwert in wenigstens einer Richtung einer Hysteresefunktion unterliegt.

10. Verfahren nach einem der Ansprüche 1-9, **dadurch gekennzeichnet, dass** die Schaltvariable ($s_{Lj}$) rekursiv wie folgt berechnet wird:

$$S_{Lj}(k) = \theta_1(k) \cdot S_{Lj}(k-1) + \theta_2(k)$$

wobei

$$\theta_1(k) = \begin{array}{l} 1 \quad \text{für} \quad \left|P_{Lj}(k)\right| - \varepsilon_{Lj}(k) \leq \left|P_{EM}(k)\right| \leq \left|P_{Lj}(k)\right| \\ 0 \quad \text{sonst} \end{array}$$

$$\theta_2(k) = \begin{array}{l} 1 \quad \text{für} \quad \left|P_{EM}(k)\right| < \left|P_{Lj}(k)\right| - \varepsilon_{Lj}(k) \\ 0 \quad \text{sonst} \end{array}$$

wobei

$P_{Lj}$ = Grenzleistungswert
$\varepsilon_{Lj}$ = zeitabhängige Schwelle der Hysteresefunktion
$P_{EM}$ = angeforderte elektrische Leistung der elektrischen Maschine.

**11.** Verfahren nach einem der Ansprüche 1 - 10, **dadurch gekennzeichnet, dass** für eine Mehrzahl unterschiedlicher Wechsel von einem in einen anderen Betriebsmodus jeweils eine Schaltvariable ($s_{Lj}$) vorgesehen ist, in deren Abhängigkeit der jeweilige Wechsel gesteuert wird.

**12.** Verfahren nach einem der Ansprüche 1-11, **dadurch gekennzeichnet, dass** der Wechsel des Betriebsmodus in Abhängigkeit von einer Wiederstartzeit und/oder einer Differenzdrehzahl ($n_{DIF}$) zwischen einer Drehzahl des Verbrennungsmotors (12) und einer Anschleppausgangsdrehzahl durchgeführt wird.

**13.** Verfahren nach Anspruch 12, **dadurch gekennzeichnet, dass** die Anschleppausgangsdrehzahl eine Drehzahl eines Gliedes des Antriebsstranges (11) ist, das zum Starten des Verbrennungsmotors (12) verwendet wird.

**14.** Steuervorrichtung (44) zum Steuern eines Hybrid-Antriebsstranges (10) für ein Kraftfahrzeug (11), die zur Durchführung des Verfahrens nach einem der Ansprüche 1-13 ausgelegt und eingerichtet ist.

**Claims**

**1.** A method for operating a hybrid drivetrain (10) for a motor vehicle (11), in which power is provided by an internal combustion engine (12) in a first operating mode (60; 76) and power is provided by an electric machine (40) in a second operating mode (56; 74), wherein a change from one operating mode into the other operating mode is carried out according to the state of the drivetrain (11) and/or the motor vehicle (10), wherein the change of the operating mode is controlled according to at least one switching variable ($s_{Lj}$), which is a function of a requested power target value ($P_{FW}$),
**characterized in that**
a characteristic curve of the at least one switching variable ($S_{Li}$) is memory-equipped and recursively calculated in consideration of previous values of the switching variable.

**2.** The method as claimed in claim 1, **characterized in that** the switching variable ($s_{Lj}$) is a binary variable.

**3.** The method as claimed in claim 1 or 2, **characterized in that** the switching variable ($s_{Lj}$) is further a function of a limit power value ($P_{Lj}$) of the electric machine (40).

**4.** The method as claimed in claim 3, **characterized in that** the limit power value ($P_{Lj}$) is a function of a maximum power value ($P_{EMmax}$) of the electric machine (40).

**5.** The method as claimed in claim 3 or 4, **characterized in that** the limit power value ($P_{Lj}$) is a function of at least one limiting factor ($\beta_i$).

**6.** The method as claimed in claim 5, **characterized in that** the limiting factor ($\beta_i$) is a value between zero and one.

**7.** The method as claimed in claim 5 or 6, **characterized in that** the limit power value ($P_{Lj}$) is a function of a minimum value of a plurality of limiting factors ($\beta_i$).

**8.** The method as claimed in one of claims 5-7, **characterized in that** the limit power value ($P_{Lj}$) is a function of one or more limiting factors ($\beta_i$) of a group of limiting factors which includes a first limiting factor ($\beta_1$), which is a function of the temperature ($T_{EM}$) of the electric machine (40), a second limiting factor ($\beta_2$), which is a function of the temperature ($T_{PWR}$) of a power electronics of the electric machine (40), a third limiting factor ($\beta_3$), which is a function of the temperature ($T_{BAT}$) of a battery, a fourth limiting factor ($\beta_4$), which in motor operation of the electric machine (40) is a function of a status-of-charge (SoC) of the battery, a fifth limiting factor ($\beta_5$), which in regenerative operation of the electric machine (40) is a function of the status-of-charge (SoC) of the battery, a sixth limiting factor ($\beta_6$), which is a function of a re-start time of the internal combustion engine (12), and a seventh limiting parameter ($\beta_7$), which is a function of a torque reserve ($M_{MR}$).

**9.** The method as claimed in one of claims 2-8, **characterized in that** a switchover of the switching variable ($s_{Lj}$) from one binary value to the other binary value is subject to a hysteresis function in at least one direction.

**10.** The method as claimed in one of claims 1-9, **characterized in that** the switching variable ($s_{Lj}$) is calculated recursively as follows:

$$s_{Lj}(k) = \theta_1(k) \cdot s_{Lj}(k-1) + \theta_2(k),$$

wherein

$$\theta_1(k) = \begin{cases} 1 & \text{for} \quad \left|P_{Lj}(k)\right| - \varepsilon_{Lj}(k) \le \left|P_{EM}(k)\right| \le \left|P_{Lj}(k)\right| \\ 0 & \text{otherwise} \end{cases}$$

$$\theta_2(k) = \begin{cases} 1 & \text{for} \quad \left|P_{EM}(k)\right| < \left|P_{Lj}(k)\right| - \varepsilon_{Lj}(k) \\ 0 & \text{otherwise} \end{cases}, \text{ wherein}$$

$P_{Lj}$ = limit power value
$\varepsilon_{Lj}$ = time-dependent threshold of the hysteresis function
$P_{EM}$ = requested electric power of the electric machine.

11. The method as claimed in one of claims 1-10, **characterized in that**, for a plurality of different changes from one operating mode into another operating mode, a switching variable ($s_{Lj}$) is provided in each case, in accordance with which the respective change is controlled.

12. The method as claimed in one of claims 1-11, **characterized in that** the change of operating mode is carried out according to a re-start time and/or a difference in speed ($n_{DIF}$) between a speed of the internal combustion engine (12) and a cranking output speed.

13. The method as claimed in claim 12, **characterized in that** the cranking output speed is a speed of a member of the drivetrain (11) used to start the internal combustion engine (12).

14. A control device (44) for controlling a hybrid drivetrain (10) for a motor vehicle (11), said device being designed and adapted to carry out the method as claimed in one of claims 1-13.

**Revendications**

1. Procédé destiné à faire fonctionner une chaîne cinématique hybride (10) pour un véhicule automobile (11), lors duquel dans un premier mode de fonctionnement (60, 76) de la puissance d'un moteur thermique (12) est mise à disposition et lors duquel, dans un deuxième mode de fonctionnement (56 ; 74), de la puissance d'une machine électrique est mise à disposition (40), un changement d'un mode de fonctionnement vers l'autre étant réalisé en fonction de l'état de la chaîne cinématique (11) et/ou du véhicule automobile (10), le changement du mode de fonctionnement étant commandé en fonction d'au moins une variable de commutation ($s_{Lj}$) qui est une fonction d'une valeur de puissance de consigne ($P_{FW}$),
   **caractérisé en ce**
   **qu'**une courbe caractéristique de l'au moins une variable de commutation ($s_{Lj}$) est douée de mémoire et est calculée de manière récurrente sous considération de valeurs précédentes de la variable de commutation.

2. Procédé selon la revendication 1, **caractérisé en ce que** la variable de commutation ($s_{Lj}$) est une variable binaire.

3. Procédé selon la revendication 1 ou 2, **caractérisé en ce que** la variable de commutation ($s_{Lj}$) est par ailleurs une fonction d'une valeur de puissance limite ($P_{Lj}$) de la machine électrique (40).

4. Procédé selon la revendication 3, **caractérisé en ce que** la valeur de puissance limite ($P_{Lj}$) est une fonction d'une valeur de puissance maximale ($P_{EMmax}$) de la machine électrique (40).

5. Procédé selon la revendication 3 ou 4, **caractérisé en ce que** la valeur de puissance limite ($P_{Lj}$) est une fonction d'au moins un coefficient de limitation ($\beta_1$).

6. Procédé selon la revendication 5, **caractérisé en ce que** le coefficient de limitation ($\beta_1$) est une valeur entre zéro et un.

7. Procédé selon la revendication 5 ou 6, **caractérisé en ce que** la valeur de puissance limite ($P_{Lj}$) est une fonction d'un valeur minimale d'une pluralité de coefficients de limitation ($\beta_1$).

**8.** Procédé selon l'une quelconque des revendications 5 à 7, **caractérisé en ce que** la valeur de puissance limite ($P_{Lj}$) est une fonction d'un ou de plusieurs coefficients de limitation ($\beta_1$) d'un groupe de coefficients de limitation qui comporte un premier coefficient de limitation ($\beta_1$) qui est une fonction de la température ($T_{EM}$) de la machine électrique (40), un deuxième coefficient de limitation ($\beta_2$) qui est une fonction de la température ($T_{PWR}$) d'une électronique de puissance de la machine électrique (40), un troisième coefficient de limitation ($\beta_3$) qui est une fonction de la température ($T_{BAT}$) d'une batterie, un quatrième coefficient de limitation ($\beta_4$) qui en mode moteur de la machine électrique (40) est une fonction d'un état de charge ($S_oC$) de la batterie, un cinquième coefficient de limitation ($\beta_5$) qui en mode générateur de la machine électrique (40) est une fonction d'un état de charge ($S_oC$) de la batterie, un sixième coefficient de limitation ($\beta_6$) qui est une fonction du temps de redémarrage du moteur thermique (12) et un septième coefficient de limitation ($\beta_7$) qui est une fonction d'une réserve de couple ($M_{MR}$).

**9.** Procédé selon l'une quelconque des revendications 2 à 8, **caractérisé en ce qu'**un changement des variables de commutation ($s_{Lj}$) d'une valeur binaire à l'autre valeur binaire dans au moins une direction est soumis à une fonction d'hystérésis.

**10.** Procédé selon l'une quelconque des revendications 1 à 9, **caractérisé en ce que** la variable de commutation ($s_{Lj}$) est calculée de manière récurrente, de la manière suivante :

$$S_{Lj}(k) = \theta_1(k) \cdot S_{Lj}(k-1) + \theta_2(k)$$

où

$$\theta_1(k) = 1 \ pour \ |P_{Lj}(k)| - \varepsilon_{Lj}(k) \leq |P_{EM}(k)| \leq |P_{Lj}(k)|$$

$$0 \ sinon$$

$$\theta_2(k) = 1 \ pour \ |P_{EM}(k)| < |P_{Lj}(k) - \varepsilon_{Lj}(k)|$$

$$0 \ sinon$$

sachant que

$P_{Lj}$ = valeur de puissance limite
$\varepsilon_{Lj}$ = seuil dépendant du temps de la fonction d'hystérésis
$P_{EM}$ = puissance électrique exigée de la part de la machine électrique.

**11.** Procédé selon l'une quelconque des revendications 1 à 10, **caractérisé en ce que**, pour une pluralité de différents changements d'un mode de fonctionnement vers l'autre, il est prévu chaque fois une variable de commutation ($s_{Lj}$), en fonction de laquelle le changement respectif est commandé.

**12.** Procédé selon l'une quelconque des revendications 1 à 11, **caractérisé en ce que** le changement du mode de fonctionnement est réalisé en fonction d'un temps de redémarrage et/ou d'un régime différentiel ($n_{DIF}$) entre un régime du moteur thermique (12) et un régime initial de remorquage.

**13.** Procédé selon la revendication 12, **caractérisé en ce que** le régime initial de remorquage est un régime d'un organe de la chaîne cinématique (11) qui est utilisé pour le démarrage du moteur thermique (12).

**14.** Dispositif de commande (44), destiné à commander une chaîne cinématique hybride (10) d'un véhicule automobile (11), qui est aménagé pour réaliser le procédé selon l'une quelconque des revendications 1 à 13.

Fig.1

Fig.2

Fig.3

Fig.4

Fig.5

Fig.6

Fig.7

Fig.8

Fig.9

Fig.10

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10153509 A1
- DE 60129071 T2
- DE 102008020842 A1
- DE 102009004671 A1
- DE 102006034933 A1
- EP 1939059 A2
- EP 1366949 A1
- EP 1452375 A2
- WO 2010137100 A1
- EP 1714817 A1
- EP 2436571 A1

**In der Beschreibung aufgeführte Nicht-Patentliteratur**

- *DIE,* vol. 100 (35), 027-A1